# EUROPÄISCHE PATENTANMELDUNG

(11) **EP 1 255 106 A2**
(43) Veröffentlichungstag der Anmeldung: **06.11.2002**
(21) Anmeldenummer: 02009089.0
(22) Anmeldetag: 24.04.2002
(51) Int. Cl.: G01N 30/48, B01J 20/32

(54) **Mit Polyalken beschichtete poröse Füllstoffe**

(30) Priorität: 27.04.2001 DE 10120821
(71) Anmelder: Sachtleben Chemie GmbH, 47198 Duisburg (DE)
(72) Erfinder: Benkner, Gabriele, 47445 Moers (DE)
(74) Vertreter: Uppena, Franz, Dr.

(57) **Zusammenfassung**

Beschrieben werden mit Polyalken (z.B. Polyethylen) beschichtete, poröse Füllstoffe, Verfahren zu deren Herstellung und deren Verwendung als Packungsmaterial in der HPLC, bzw. als Trägermaterial auf Platten in der Dünnschichtchromatografie.

## Beschreibung

Die Erfindung betrifft mit Polyalken beschichtete, poröse Füllstoffe, Verfahren zu deren Herstellung und deren Verwendung.

In der Hochleistungs-Säulenflüssig-Chromatografie (HPLC) finden verstärkt sogenannte Verbundwerkstoffe Verwendung als Packungsmaterialien. Dabei werden anorganische Packungsmaterialien mit Schichten von organischen Polymeren überzogen, um die günstigen Eigenschaften der anorganischen Materialien (Druckstabilität) mit den günstigen Eigenschaften der organischen Polymeren (chemische Stabilität) zu vereinen.

Bekannt sind Überzüge von Poly-(Butadien-Maleinsäure) (PBDMA) auf porösen anorganischen Trägermaterialien (P.Kolla, J.Köhler, G.Schomburg; Chromatographia Vol. 23, No. 7, July 1987). Von Nachteil dieser Technologie sind ein großer Herstellaufwand incl. eines sehr hohen Lösungsmittelbedarfs (je 10 g Produkt sind mindestens 2 Liter Lösungsmittel zum Waschen notwendig).

Bekannt sind auch Beschichtungen aus Polybutadien (M.P. Rigney, T.P. Weber, P.W. Car, J. Chromatogr., 484, 273-291 (1989). Von Nachteil sind die relativ lange Vernetzungszeit bei der Herstellung der Beschichtung und ebenfalls der hohe Waschaufwand mit Lösungsmitteln.

Weiterhin bekannt sind auf SiO₂-, Al₂O₃- und ZrO₂-Oberflächen kovalent aufgebrachte Silan-Styrol-Copolymere (A. Kurganov, V. Davankov, T. Isajeva, J. Chromatogr., 660 (1994) 97-111). Von Nachteil dieses Überzuges ist die Unbeständigkeit gegen Fließmittel mit einem hohem pH-Wert.

Aufgabe der Erfindung ist es, die Nachteile des Standes der Technik zu überwinden und mit einem organischen Polymer beschichtete Füllstoffe zu schaffen, die relativ beständig gegen Lösungsmittel und starke Säuren oder Laugen (Fließmittel) sind, die sich relativ einfach herstellen lassen und die sich als Packungsmaterial in der HPLC, bzw. als Trägermaterial auf Platten in der Dünnschichtchromatografie verwenden lassen. Da in der HPLC, bzw. Dünnschichtchromatografie oftmals Umkehrphasen, d.h. hydrophobe (lipophile) Packungsmaterialien gewünscht sind, soll der gesuchte beschichtete Füllstoff auch eine hydrophobe (lipophile) Beschichtung aufweisen. Darüber hinaus soll er auch möglichst druckstabil sein, um den bei der Herstellung von Chromatografiesäulen herrschenden Drücken von bis zu 800 bar standhalten zu können.

Gelöst wird die Aufgabe durch mit Polyalken beschichtete, poröse Füllstoffe.

Überraschend wurde gefunden, dass sich Polyalkene, obwohl schon als Polymere vorliegend, relativ leicht auf poröse Füllstoffe aufbringen lassen. Es muss also nicht auf der Füllstoffoberfläche (ausgehend vom Monomer) eine Polymerisation (falls dies überhaupt möglich ist) oder eine Nachvernetzung durchgeführt werden.

Als bevorzugte Polyalkene werden Polyethylen, Polypropylen, Polybuten und Polypenten eingesetzt. Besonders bevorzugt ist Polyethylen. Die Molmassen M_{w} (mittlere Molmasse bezogen auf das Gewicht, Gewichtsmittel) der eingesetzten Polyalkene betragen bevorzugt 1000 bis 200000. Tendenziell erfordern Füllstoffe mit kleinen Poren Polyalkene mit kleineren Molmassen, z.B. werden bei einer Porengröße von 10 nm bevorzugt Polyalkene mit einer Molmasse M_{w} von maximal 5000 eingesetzt.

Als Füllstoffe können poröse, anorganische Oxide, wie alle Arten von Siliziumoxiden (z.B. Kieselgele), Aluminiumoxide, Zirkonoxid oder Titandioxid eingesetzt werden.

Bevorzugt weisen die Füllstoffe Teilchengrößen von 2 bis 200 µm, besonders bevorzugt von 3 bis 100 µm, auf. Die Porengrößen der Füllstoffe liegen bevorzugt zwischen 3 und 400 nm, besonders bevorzugt zwischen 10 und 300 nm.

Die erfindungsgemäßen, mit Polyalken beschichteten, porösen Füllstoffe können nach folgenden Verfahren hergestellt werden:
1. Das Polyalken wird in einem organischen Lösungsmittel gelöst. Der poröse Füllstoff wird gegebenenfalls getrocknet, z.B. durch Azeotropdestillation. Zu der Lösung von Polyalken im Lösungsmittel wird der trockene Füllstoff gegeben und gleichmäßig verteilt (z.B. durch Rühren). Anschließend wird das Lösungsmittel bis zur Trockene abgedampft, bevorzugt unter Rühren oder Rotieren und besonders bevorzugt unter Vakuum. Erhalten wird der mit dem Polyalken beschichtete, poröse Füllstoff.
2. Das Polyalken wird in einem organischen Lösungsmittel gelöst. Zu dieser Lösung wird der trockene, poröse Füllstoff gegeben und gleichmäßig verteilt. Anschließend wird die Suspension unter Rühren oder Rotieren auf Raumtemperatur abgekühlt. Bevorzugt geschieht diese Abkühlung innerhalb von 0,5 bis 5 Stunden, besonders bevorzugt 1 bis 3 Stunden. Dabei fällt das gelöste Polyalken auf der Oberfläche des porösen Füllstoffes aus, bildet also eine Beschichtung auf dem porösen Füllstoff. Dieser kann von der Lösung abgetrennt werden (z.B. durch Filtration) und ggf. gereinigt und getrocknet werden.

Als organische Lösungsmittel für die beschriebenen Verfahren können bevorzugt Kohlenwasserstoffe mit einem Siedepunkt von > 60 °C, bevorzugt > 70 °C und/oder Halogenkohlenwasserstoffe mit einem Siedepunkt von > 40 °C eingesetzt werden. Besonders bevorzugte Lösungsmittel sind Hexan, Heptan, Octan, Cyclohexan, Cycloheptan, Benzol, Toluol, Xylol, Cumol, Tetralin, Dichlormethan, Dichlorethan, Dichlorpropan, Dibrompropan und Dibrompropan. Zum Lösen des Polyalkens im organischen Lösungsmittel wird dieses bevorzugt erwärmt, wobei die Maximaltemperatur vom Siedepunkt des Lösungsmittel abhängt, bevorzugt 180 °C jedoch nicht überschreiten soll.

Die Menge des einzusetzenden Polyalkens richtet sich nach der spezifischen Oberfläche des zu beschichtenden porösen Füllstoffes und nach dessen Porengröße. Eine bevorzugte Polymerschichtdicke ist 0,5 bis 5 nm. Das bedeutet beispielsweise, dass bei einem Füllstoff mit einer spezifischen Oberfläche von 60 m²/g pro 100 g Füllstoff 2,4 bis 24 g Polymer mit einer Dichte von 0,8 g/ml eingesetzt werden können. (100 g Füllstoff haben eine Oberfläche von 6000 m², bei einer Polymerschichtdicke von 0,5 nm wird ein Volumen von 3 ml Polymer benötigt, bei einer Polymerdichte von 0,8 g/ml entspricht dies 2,4 g Polymer).

Vor der beschriebenen Beschichtung mit einem Polyalken kann die Oberfläche des porösen Füllstoffes mit Hilfe eines sogenannten Primers modifiziert (grundiert) werden. Als Primer können Substanzen, die zur Hydrophobierung von Oberflächen geeignet sind, eingesetzt werden. Bevorzugte Primer sind Silane, Titanate, Germanate, Carbonsäuren mit mehr als 2 C-Atomen (bevorzugt 10 bis 18 C-Atome), organische Sulfonsäuren oder organische Phosphonsäuren. Beispiele für Primer sind Triethoxyvinylsilan, Alkylsilane (z.B. Butylsilan, Octylsilan, Decylsilan, Octadecylsilan) Acrylsäure, Methacrylsäure, Laurinsäure, Stearinsäure, Butylphosphonsäure, Octylphosphonsäure oder Octadecylphosphonsäure. Die Oberflächenmodifizierung kann folgendermaßen vorgenommen werden: Der poröse Füllstoff wird in einem Lösungsmittel, welches mit Wasser ein Azeotrop bildet, dispergiert und die gewünschte Menge Primer wird zugegeben. Anschließend wird das Lösungsmittel unter Rühren vollständig abgedampft. Dabei koppelt der Primer chemisch an die Füllstoffoberfläche an (z.B. Veresterung oder Umesterung an oberflächenständigen OH-Gruppen). Die bevorzugte maximale Zugabemenge wird z.B. so bemessen, dass jede oberflächenständige OH-Gruppe des Füllmaterials (bei TiO₂ ca. 10 OH-Gruppen pro nm²) verestert werden könnte, also werden z.B. pro 100 g TiO₂ mit einer spezifischen Oberfläche von 60 m²/g bevorzugt maximal 0,1 Mol Primer eingesetzt. Je nach Molekülgröße des Primers können allerdings aus sterischen Gründen nicht immer alle OH-Gruppen erreicht werden. Überflüssiger Primer kann z.B. mit einem Lösungsmittel, in dem der Primer löslich ist, in einer Filtrationsapparatur abgespült werden. An diesen Verfahrensschritt schließen sich eine Trocknung und die beschriebene Polyalkenbeschichtung an.

Verwendung finden die mit Polyalken beschichteten, porösen Füllstoffe in der Chromatografie, z.B. als Packungsmaterial in der Flüssigchromatografie (wie HPLC), bzw. als Trägermaterial auf Platten in der Dünnschichtchromatografie.

Die erfindungsgemäßen Füllstoffe haben den Vorteil, relativ einfach herstellbar zu sein, gute Stabilitäten gegen Alkalien und gegen Druck zu besitzen und sich somit hervorragend als Umkehrphasen in der Chromatografie, besonders der HPLC, zu eignen.

Die Erfindung wird im folgenden anhand von Beispielen näher erläutert.

### Beispiel 1: Beschichtung von Titandioxid mit Polyethylen

1,5 g Polyethylen mit einem M_{w} von ca. 4000 wurden in 150 ml Toluol gegeben und in einem 1-I-Dreihalskolben mit Intensivkühler und Schnellaufrührer am Rückfluss bis zur vollständigen Lösung gekocht. 30 g getrocknetes, poröses Titandioxid mit einer mittleren Teilchengröße von 5 µm und einem mittleren Porendurchmesser von 10 nm wurden zu der Lösung gegeben. Der Ansatz wurde 15 Minuten gekocht und dabei mit 500 U/min gerührt. Dann wurde die Beheizung abgestellt und mit gleicher Geschwindigkeit bis zur Abkühlung auf Raumtemperatur weiter gerührt. Der Feststoff wurde anschließend abfiltriert, mit 50 ml Aceton gewaschen und getrocknet.

Das so erhaltene Produkt hatte einen Kohlenstoffgehalt von 3,5 Gew.-%. Weitere Eigenschaften ergeben sich aus den folgenden Angaben:

| Physikalische Daten des Titandioxids | vor Beschichtung | nach Beschichtung |
|---|---|---|
| Spezifische Oberfläche | 55 m²/g | 28 m²/g |
| Porenvolumen | 0,18 ml/g | 0,10 ml/g |
| Porendurchmesser | 10 nm | 9,6 nm |

### Beispiel 2: Beschichtung von Titandioxid mit Polyethylen

1,5 g Polyethylen mit einem M_{w} von ca. 4000 wurden in 150 ml Toluol gegeben und in einem 1-I-Dreihalskolben mit Intensivkühler, Destillationsbrücke und Schnellaufrührer am Rückfluss bis zur vollständigen Lösung gekocht. 30 g getrocknetes, poröses Titandioxid mit einer mittleren Teilchengröße von 5 µm und einem mittleren Porendurchmesser von 10 nm wurden zu der Lösung gegeben. Anschließend wurde das Lösungsmittel bis zur völligen Trocknung abdestilliert. Dabei wurde mit 500 U/min gerührt.

Das so erhaltene Produkt hatte einen Kohlenstoffgehalt von 3,1 Gew.-%. Weitere Eigenschaften ergeben sich aus den folgenden Angaben:

| Physikalische Daten des Titandioxids | vor Beschichtung | nach Beschichtung |
|---|---|---|
| Spezifische Oberfläche | 55 m²/g | 29 m²/g |
| Porenvolumen | 0,18 ml/g | 0,11 ml/g |
| Porendurchmesser | 10 nm | 9,6 nm |

### Beispiel 3: Beschichtung von mit Octylphosphonsäure modifiziertem Titandioxid mit Polyethylen

0,15 g Octylphosphonsäure (Primer) wurden in 40 ml Toluol gelöst. Dazu wurden 10 g getrocknetes, poröses Titandioxid mit einer mittleren Teilchengröße von 5 µm und einem mittleren Porendurchmesser von 10 nm gegeben. Das Lösemittel wurde bei Normaldruck am Rotationsverdampfer entfernt. Der Rückstand wurde dann zu einer 120 °C heißen Lösung von 0,5 g Polyethylen mit einer M_{w} von ca. 5000 in 80 ml Xylol gegeben und dann am Rotationsverdampfer bei einer Badtemperatur von 140°C getrocknet.

Das so erhaltene Produkt hatte einen Kohlenstoffgehalt von 5,4 %.

Weitere Eigenschaften ergeben sich aus den folgenden Angaben:

| Physikalische Daten des Titandioxids | vor Beschichtung | nach Beschichtung |
|---|---|---|
| Spezifische Oberfläche | 55 m²/g | 25 m²/g |
| Porenvolumen | 0,18 ml/g | 0,09 ml/g |
| Porendurchmesser | 10 nm | 9,5 nm |

### Beispiel 4: Flüssigchromatografie mit einem beschichteten, porösen Füllstoff nach Beispiel 1

3,6 g eines beschichteten, porösen Füllstoffes (hergestellt nach der Filtrationsmethode gemäß Beispiel 1) wurden in 37 ml Isopropanol geschüttelt und mittels einer üblichen Füllvorrichtung in eine HPLC-Säule (4 mm x 150 mm) gefüllt. Nach Verschließen der Apparatur wurden sofort 250 ml Isopropanol mit 600 bis 700 bar Flüssigkeitsdruck von oben durchspült. Dabei bildete sich eine dichte Packung des Füllmaterials in der Säule.

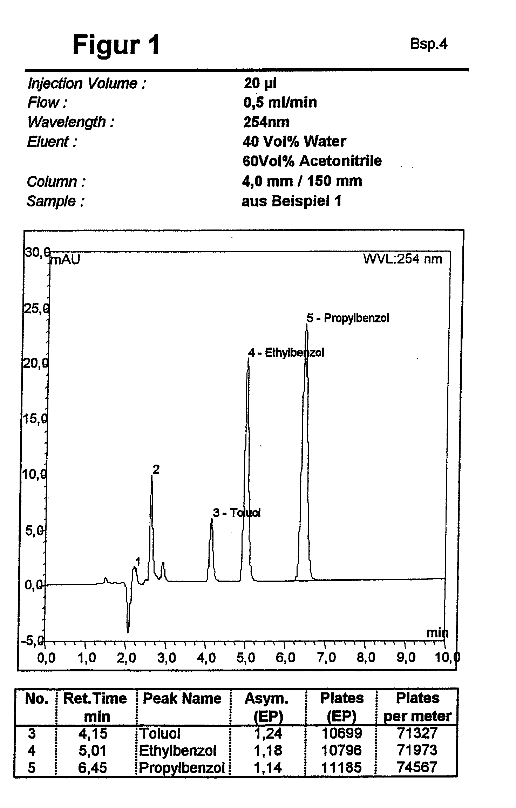

Mit dieser Säule wurden 20 µl einer Probe, bestehend aus einer in Acetonitril und Wasser gelösten Mischung aus Toluol, Ethylbenzol und Popylbenzol chormatografiert. Das Ergebnis ist in Figur 1 wiedergegeben.

### Beispiel 5: Flüssigchromatografie mit einem beschichteten, porösen Füllstoff nach Beispiel 2

3,6 g eines beschichteten, porösen Füllstoffes (hergestellt nach der Trocknungsmethode gemäß Beispiel 2) wurden in 37 ml Isopropanol geschüttelt und mittels einer üblichen Füllvorrichtung in eine HPLC-Säule (4 mm x 150 mm) gefüllt. Nach Verschließen der Apparatur wurden sofort 250 ml Isopropanol mit 600 bis 700 bar Flüssigkeitsdruck von oben durchspült. Dabei bildete sich eine dichte Packung des Füllmaterials in der Säule.

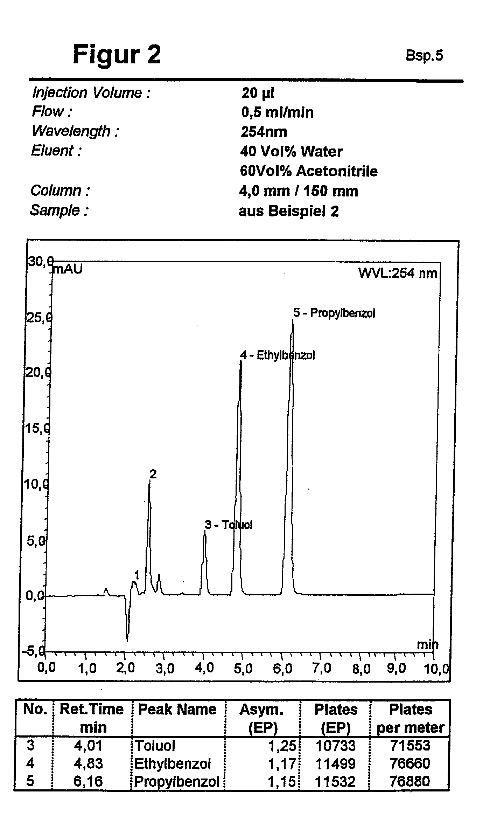

Mit dieser Säule wurden 20 µl einer Probe, bestehend aus einer in Acetonitril und Wasser gelösten Mischung aus Toluol, Ethylbenzol und Popylbenzol chormatografiert. Das Ergebnis ist in Figur 2 wiedergegeben.

### Beispiel 6: Flüssigchromatografie mit einem beschichteten, porösen Füllstoff nach Beispiel 3

3,6 g eines beschichteten, porösen Füllstoffes (hergestellt mit einem Primer gemäß Beispiel 3) wurden in 37 ml Isopropanol geschüttelt und mittels einer üblichen Füllvorrichtung in eine HPLC-Säule (4 mm x 150 mm) gefüllt. Nach Verschließen der Apparatur wurden sofort 250 ml Isopropanol mit 600 bis 700 bar Flüssigkeitsdruck von oben durchspült. Dabei bildete sich eine dichte Packung des Füllmaterials in der Säule.

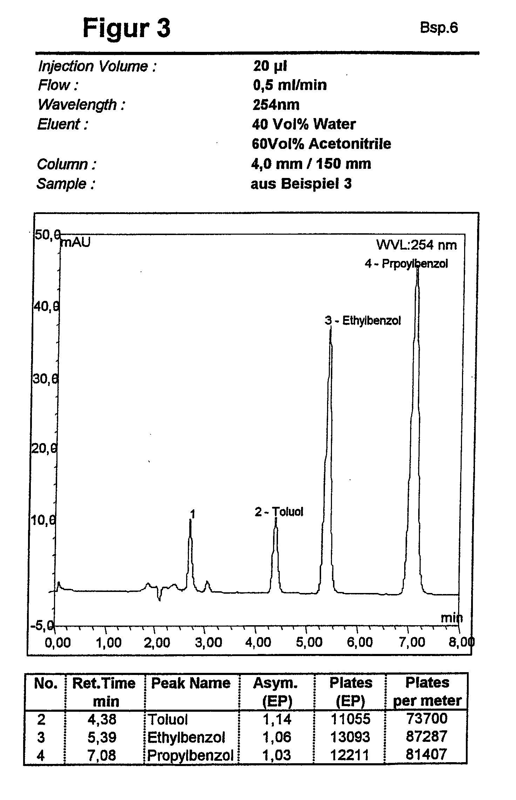

Mit dieser Säule wurden 20 µl einer Probe, bestehend aus einer in Acetonitril und Wasser gelösten Mischung aus Toluol, Ethylbenzol und Popylbenzol chormatografiert. Das Ergebnis ist in Figur 3 wiedergegeben.

### Beispiel 7: Behandlung der Säule aus Beispiel 5 mit NaOH

Die Säule aus Beispiel 5 wurde nach 20 Injektionen verschiedener Testgemische jeweils bei einem Fluss von 2 ml/Minute 30 Minuten mit 1 molarer NaOH, dann 10 Minuten mit 1 %-iger Essigsäure und anschließend 10 Minuten mit einem Gemisch aus 60 Vol.-% Acetonitril und 40 Vol.-% Wasser gespült.

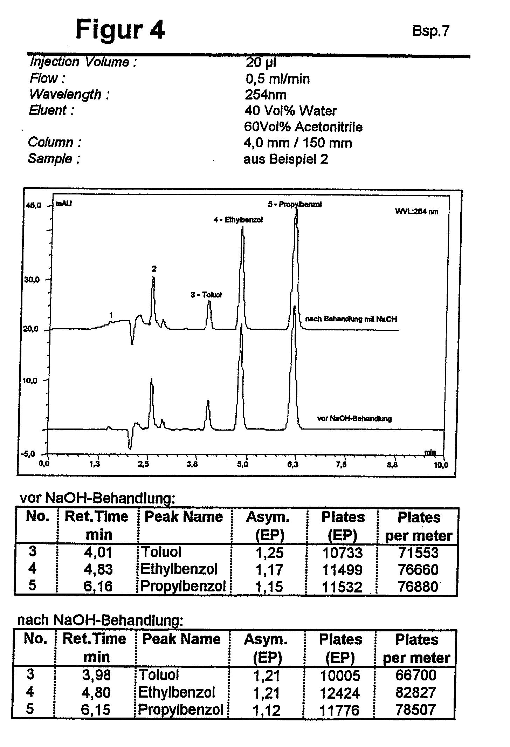

Nach dieser Behandlung wurde die Trennung der Alkylbenzole analog Beispiel 5 wiederholt. Das Ergebnis ist in Figur 4 (obere Kurve) wiedergegeben. Zum Vergleich ist in der unteren Kurve nochmals das Chromatogramm vor der Behandlung (Beispiel 5) angegeben. Es zeigte sich, dass die Säule durch die NaOH-Behandlung keinen Schaden genommen hatte und die Qualität der Säule gleich geblieben war.

## Patentansprüche

1. Mit Polyalken beschichtete, poröse Füllstoffe.

2. Füllstoffe nach Anspruch 1, **dadurch gekennzeichnet, dass** als Polyalken Polyethylen, Polypropylen, Polybutylen oder Polypenten eingesetzt wird.

3. Füllstoffe nach Anspruch 1 oder 2, **dadurch gekennzeichnet, dass** als poröse Füllstoffe Siliziumoxide (z.B. Kieselgele), Aluminiumoxide, Zirkonoxid oder Titandioxid eingesetzt wird.

4. Füllstoffe nach einem der Ansprüche 1 bis 3, **dadurch gekennzeichnet, dass** die Polymerschichtdicke 0,5 bis 5 nm beträgt.

5. Verfahren zur Herstellung von mit Polyalken beschichteten, porösen Füllstoffen, **dadurch gekennzeichnet, dass** das Polyalken in einem organischen Lösungsmittel gelöst wird, zu dieser Lösung ein trockener, poröser Füllstoff gegeben wird und das Lösungsmittel bis zur Trockene abgedampft wird.

6. Verfahren zur Herstellung von mit Polyalken beschichteten, porösen Füllstoffen, **dadurch gekennzeichnet, dass** das Polyalken in einem organischen Lösungsmittel gelöst wird, zu dieser Lösung ein trockener, poröser Füllstoff gegeben wird und die erhaltene Lösung abgekühlt wird, wobei das gelöste Polyalken auf der Oberfläche des porösen Füllstoffes ausfällt.

7. Verfahren nach einem der Ansprüche 5 oder 6, **dadurch gekennzeichnet, dass** als organische Lösungsmittel Kohlenwasserstoffe mit einem Siedepunkt von > 60 °C und/oder Halogenkohlenwasserstoffe mit einem Siedepunkt von > 40 °C eingesetzt werden.

8. Verfahren nach Anspruch 7, **dadurch gekennzeichnet, dass** als Lösungsmittel eine oder mehrere der Verbindungen Hexan, Heptan, Octan, Cyclopentan, Cyclohexan, Cycloheptan, Benzol, Toluol, Xylol, Cumol, Tetralin, Dichlormethan, Dichlorethan, Dichlorpropan, Dibrompropan oder Dibrompropan eingesetzt wird.

9. Verfahren nach einem der Ansprüche 5 bis 8, **dadurch gekennzeichnet, dass** das organischen Lösungsmittel zum Lösen des Polyalkens auf maximal 180 °C erwärmt wird.

10. Verfahren nach einem der Ansprüche 5 bis 9, **dadurch gekennzeichnet, dass** die Menge des einzusetzenden Polyalkens so bemessen wird, dass auf der Oberfläche des porösen Füllstoffes eine Polymerschichtdicke von 0,5 bis 5 nm aufgebracht wird.

11. Verfahren nach einem der Ansprüche 5 bis 10, **dadurch gekennzeichnet, dass** die Oberfläche des porösen Füllstoffes mit einem Primer modifiziert (grundiert) wird und anschließend mit einem Polyalken beschichtet wird.

12. Verfahren nach Anspruch 11, **dadurch gekennzeichnet, dass** als Primer Substanzen, die zur Hydrophobierung von Oberflächen geeignet sind, eingesetzt werden, wie Silane, Titanate, Germanate, Carbonsäuren mit mehr als 2 C-Atomen, organische Sulfonsäuren oder organische Phosphonsäuren.

13. Verfahren nach einem der Ansprüche 11 oder 12, **dadurch gekennzeichnet, dass** zur Modifizierung der Oberfläche des porösen Füllstoffes dieser in einem Lösungsmittel, welches mit Wasser ein Azeotrop bildet, dispergiert und der Primer zugegeben wird und anschließend das Lösungsmittel vollständig abgedampft wird.

14. Verwendung der mit Polyalken beschichteten, porösen Füllstoffe in der Chromatografie, z.B. als Packungsmaterial in der Flüssigchromatografie (wie HPLC), bzw. als Trägermaterial auf Platten in der Dünnschichtchromatografie.
